# FASCICULE DE BREVET EUROPEEN

(11) **EP 0 557 219 B1**
(45) Date de publication et mention de la délivrance du brevet: **13.05.1998**
(21) Numéro de dépôt: 93420073.4
(22) Date de dépôt: 16.02.1993
(51) Int. Cl.: G01P 15/08, G01P 15/125, G01L 9/00

(54) **Micro-capteur capacitif à capacité parasite réduite et procédé de fabrication**
Kapazitiver Mikrosensor mit reduzierter parasitärer Kapazität und Verfahren zur Herstellung
Micro-capacitive sensor with reduced parasitic capacitance and manufacturing method

(30) Priorité: 20.02.1992 FR 9202191
(43) Date de publication de la demande: 25.08.1993
(73) Titulaire: SEXTANT AVIONIQUE S.A., 92366 Meudon la Forêt Cédex (FR)
(72) Inventeur: Thomas, Isabelle, F-26000 Valence (FR); Lefort, Pierre-Olivier, F-26000 Valence (FR); Legoux, Christophe, F-26000 Valence (FR)
(74) Mandataire: de Beaumont, Michel

(56) Documents cités:
- EP-A- 0 369 352

## Description

La présente invention concerne le domaine des micro-capteurs capacitifs en silicium. De tels micro-capteurs peuvent par exemple constituer des capteurs de pression, des capteurs d'accélération...

Ces dernières années, se sont développés de nouveaux types de micro-capteurs en silicium, tirant partie des techniques de gravure du silicium développées dans le cadre de la fabrication des composants électroniques à semiconducteurs. Au début, de tels micro-capteurs étaient constitués de l'assemblage de plaquettes de silicium convenablement gravées et de lames minces de verre servant de boîtier étanche ou de plaques de séparation isolantes entre des plaquettes de silicium, ces lames de verre portant éventuellement divers motifs d'électrodes métalliques.

On tend actuellement à développer des micro-capteurs entièrement en silicium, sans plaque de verre jouant un rôle actif. Des exemples très schématiques de tels capteurs sont illustrés en figures 1 et 2 et correspondent par exemple aux capteurs décrits dans EP-A-0 369 352.

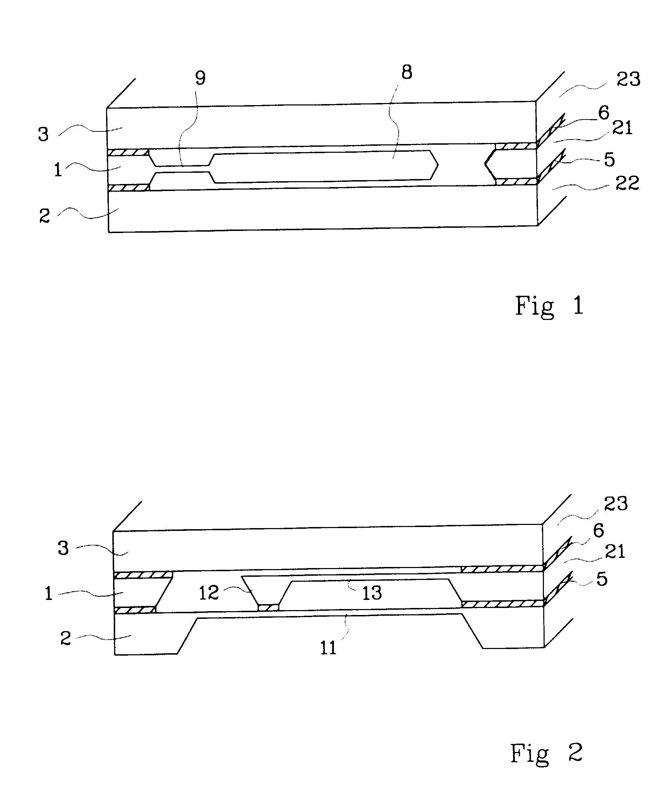

Le capteur de la figure 1 est un capteur d'accélération et le capteur de la figure 2 un capteur de pression. Chacun de ces capteurs comprend une plaquette de silicium centrale 1 prise en sandwich entre des plaquettes de silicium externes 2 et 3. L'isolement entre les plaquettes est assuré par une première bande isolante, généralement une couche d'oxyde de silicium, 5 entre les plaquettes 1 et 2 et une deuxième bande isolante 6 entre les plaquettes 1 et 3. Ces bandes isolantes prennent la forme d'un cadre disposé entre des plaquettes adjacentes, le long des bords de celles-ci. Des couches d'oxyde peuvent être obtenues par croissance ou dépôt à partir de l'une des plaquettes adjacentes. Une fois les trois plaquettes appliquées les unes contre les autres, une soudure est réalisée par un recuit à une température de 900 à 1100°C. Pour cela, la pratique montre qu'il convient que les surfaces de silicium et d'oxyde de silicium en regard aient de très faibles rugosités, par exemple inférieures à 0,5 nm. Les plaquettes de silicium extrêmes 2 et 3 définissent entre elles et avec la partie de cadre de la plaquette de silicium 1 une région dans laquelle est contenue une atmosphère contrôlée, par exemple une atmosphère à très faible pression, appelée vide.

La description précédente s'applique communément aux micro-capteurs des figures 1 et 2.

Dans le cas de la figure 1, qui représente schématiquement une vue en coupe d'un accéléromètre, la plaquette de silicium centrale 1 est gravée avant assemblage pour comprendre un cadre et une plaque centrale ou masselotte 8 fixée au cadre par des barres minces de suspension 9. Une seule barre apparaît dans la vue en coupe schématique de la figure 1. De façon classique, on utilisera des systèmes de suspension à deux ou quatre barres. Les plaquettes externes 1 et 3 délimitent avec le cadre formé à la périphérie de la plaquette centrale un espace vide. On détecte les variations de capacité entre la face supérieure de la masselotte et la plaquette de silicium 3 et éventuellement également entre la face inférieure de la masselotte et la plaquette inférieure 2. Quand le dispositif est soumis à une accélération, la masselotte 8 se déplace par rapport à l'ensemble du dispositif et les capacités susmentionnées varient. Il est également généralement prévu un asservissement électrostatique pour maintenir en place la masselotte par application d'un champ électrique continu et c'est alors le signal d'erreur qui donne une indication de la variation de capacité.

La figure 2 représente très schématiquement une structure constituant un capteur de pression. La plaquette inférieure 2 est gravée pour y former une membrane mince 11. La plaquette 1 est gravée pour former un plot 12 appuyé sur cette membrane. Une lamelle de silicium 13 s'étend entre ce plot et le cadre de la plaquette 1. A nouveau, l'espace délimité par la plaquette supérieure, la plaquette inférieure et le cadre de la plaquette centrale définit un espace vide. Des variations de pression externe déforment la membrane 11 et entraînent une déformation de la tension de la lamelle 13. Cette variation de tension entraîne une variation de la fréquence de résonance du résonateur capacitif constitué par la lamelle 13 et la surface en regard de la plaquette 3. De préférence, la face interne de la plaquette 3 est gravée pour former une bande en saillie en face de la lamelle 13.

Dans le cas de la figure 1, des électrodes 21, 22 et 23 doivent être respectivement solidaires des plaquettes 1, 2 et 3. Dans le cas de la figure 2, seules les électrodes 21 et 23 seront nécessaires.

Ces structures de l'art antérieur, qu'elles utilisent directement une mesure de capacité ou une mesure de fréquence de résonance présentent l'inconvénient que ces mesures sont fortement affectées par la présence de capacités parasites élevées. Ces capacités parasites correspondent essentiellement aux capacités entre le cadre formé dans la plaquette 1 et les parties en regard de la plaquette supérieure et/ou inférieure, capacités dont le diélectrique est constitué par les couches d'isolant (oxyde de silicium) 5 et 6.

Un objet de la présente invention est de prévoir une structure de micro-capteur permettant d'éviter l'influence de ces capacités parasites.

Pour atteindre cet objet, la présente invention prévoit un micro-capteur capacitif comprenant un sandwich de trois plaquettes de silicium, chaque face d'une région en forme de cadre de la plaquette centrale étant accolée à la face en regard de chaque plaquette externe par l'intermédiaire d'une couche mince formant une bande isolante, l'une au moins des plaquettes externes constituant une première électrode, et au moins une partie centrale de cette plaquette centrale formant une capacité variable avec au moins l'une des plaquettes externes. La région en forme de cadre de la plaquette centrale est dissociée électriquement de la partie centrale, des premiers moyens de contact étant solidaires de la partie en forme de cadre et des deuxièmes moyens de contact étant reliés à la partie centrale et constituant une deuxième électrode de ladite capacité variable.

Quand le micro-capteur capacitif constitue un accéléromètre, la partie centrale de la plaquette centrale forme une masselotte en suspension sur un plot pris en sandwich entre les plaquettes externes par l'intermédiaire de couches isolantes.

Quand le micro-capteur capacitif constitue un capteur de pression, la plaquette inférieure comprend une partie amincie formant membrane et la partie centrale de la plaquette centrale comprend un premier plot monté sur cette membrane et une lamelle s'étendant entre le premier plot et un deuxième plot monté entre les plaquettes externes par l'intermédiaire de couches isolantes, la lamelle formant avec la plaquette supérieure un résonateur capacitif de caractéristiques variables en fonction de la pression appliquée.

Selon un mode de réalisation de la présente invention, la région en forme de cadre est mise au potentiel de référence auquel est placée, éventuellement de façon flottante, la région centrale.

Selon un mode de réalisation de la présente invention les couches isolantes sont en oxyde de silicium.

La présente invention prévoit aussi un procédé de fabrication d'un micro-capteur capacitif comme indiqué dans la revendication 6.

Ces objets, caractéristiques et avantages ainsi que d'autres de la présente invention seront exposés en détail dans la description suivante de modes de réalisation particuliers faite en relation avec les figures jointes parmi lesquelles :
les figures 1 et 2 décrites précédemment sont des vues en coupe schématique d'un micro-capteur d'accélération et d'un micro-capteur de pression selon l'art antérieur ;
La figure 3 est une vue en coupe d'un mode de réalisation d'un micro-capteur d'accélération selon la présente invention ;
la figure 4 est un schéma électrique faisant ressortir les avantages de la présente invention ; et
les figures 5A et 5B représentent des étapes successives de fabrication d'un mode de réalisation d'un capteur selon la présente invention.

Dans les diverses figures, les épaisseurs relatives des diverses couches et les dimensions latérales des divers éléments ne sont pas à l'échelle mais ont été tracées arbitrairement pour faciliter la lisibilité des figures et en simplifier le dessin.

Egalement, dans les diverses figures, les faces latérales des diverses plaquettes de silicium ont été représentées comme gravées de façon oblique puisque c'est l'aspect que prennent ces faces latérales quand on a réalisé une gravure anisotrope de silicium selon des plans (1,1,1). Toutefois, on notera d'une part que ceci ne constitue pas une limitation de la présente invention, d'autre part que l'angle figurant sur les figures est arbitraire. Un exemple d'angle réel serait d'environ 55°.

La description ci-après de modes de réalisation particuliers de la présente invention est faite dans le cadre d'une structure de type micro-capteur d'accélération correspondant à celle de la figure 1. Toutefois, la présente invention s'applique de façon générale à d'autres types de micro-capteurs constitués d'un assemblage de plusieurs plaquettes de silicium.

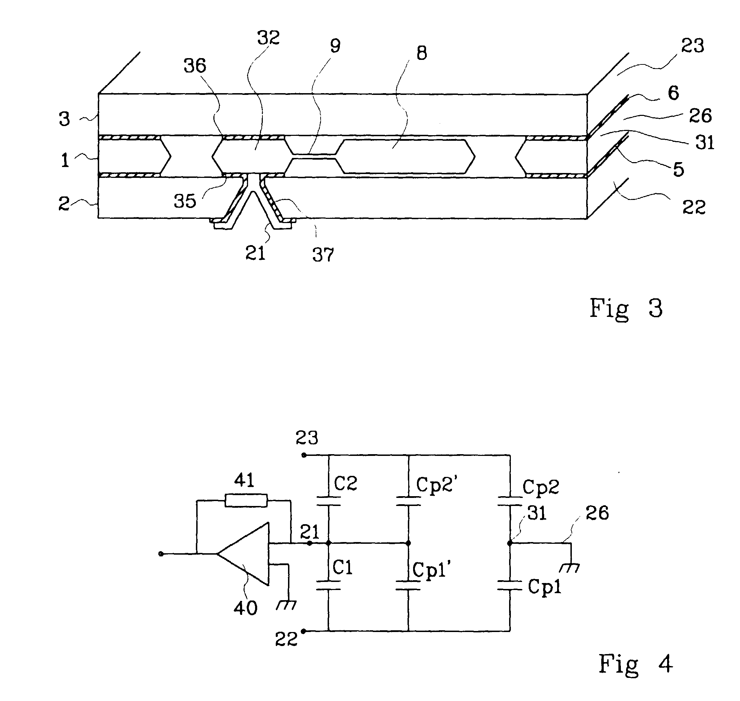

La figure 3 est une vue en coupe schématique d'un micro-capteur d'accélération modifié selon la présente invention. Dans cette figure, des éléments analogues à ceux de la figure 1 sont désignés par de mêmes références numériques. La différence essentielle entre la structure selon la présente invention et celle de la figure 1 est que la partie formant cadre de la plaquette 1 est complètement séparée électriquement de la partie active. Ainsi, la plaquette 1 est divisée en un cadre 31 destiné à assurer l'espacement entre les plaquettes externes 2 et 3 et à définir un espace interne vide et une partie 32 liée à la partie active. Dans la vue en coupe de la figure 3, cette partie 32, est liée aux plaquettes externes par l'intermédiaire de couches d'oxyde de silicium 35 et 36 correspondant aux couches d'oxyde de silicium 5 et 6 isolant le cadre 31 des plaquettes externes 2 et 3.

Dans la vue en coupe de la figure 3, la partie de silicium 32 apparaît comme un plot relié à la masselotte par une barre de suspension 9 unique. Comme on l'a indiqué précédemment, dans des dispositifs pratiques, on utilise plus généralement des systèmes à deux ou quatre barres de suspension. Dans le cas d'une liaison à deux barres de suspension, la partie de silicium 32 correspondra à une bande allongée et, dans le cas d'un système à quatre barres de liaison, la partie de silicium 32 correspondra à un cadre interne, ou à quatre plots, entourant la masselotte 8. Toutefois, la partie 32 sera appelée ci-après "plot" et ce terme devra être interprété comme désignant un plot, une bande ou un cadre interne.

Comme précédemment, des connexions 22 et 23 sont prises sur les plaquettes de silicium externes. La connexion 21 destinée à établir un contact électrique avec la masselotte est prise par l'intermédiaire du plot 32, par exemple de la façon représentée en prévoyant une ouverture dans la plaquette inférieure, cette ouverture ayant des parois revêtues d'une couche d'isolement 37 et le contact 21 étant constitué par une métallisation venant contacter le plot 32.

L'avantage de la prévision du cadre externe 31 ressort du schéma électrique de la figure 4. Dans ce schéma, on retrouve les bornes 21, 22 et 23. Le condensateur C1 correspond à la capacité entre la plaquette 2 et la masselotte 8. Le condensateur C2 correspond à la capacité entre la plaquette 3 et la masselotte 8. La capacité parasite entre la plaquette inférieure 2 et la plaquette centrale 1 correspond essentiellement à une capacité parasite Cp1 disposée entre la borne 22 et une borne 26 reliée au cadre 31. De même, la capacité parasite entre les plaquettes 1 et 3 correspond essentiellement à une capacité parasite Cp2 disposée entre les bornes 23 et 26.

A la gauche de la figure 4, on a représenté l'étage d'entrée habituel d'un système de mesure de capacité qui comprend un amplificateur opérationnel 40 dont la sortie est ramenée sur la première entrée par une impédance de réaction 41. La première entrée de l'amplificateur opérationnel est reliée à la borne 21 et la deuxième entrée à un potentiel de référence, par exemple la masse. Ainsi, la borne 21 se trouve à un potentiel flottant correspondant audit potentiel de référence. Les bornes 22 et 23 reçoivent dans la plupart des cas, de façon symétrique, la superposition d'une tension continue et d'une tension alternative. Si la borne 26 est reliée au même potentiel de référence que la deuxième entrée de l'amplificateur 40, par exemple la masse, les capacités parasites Cp1 et Cp2 n'auront plus aucun effet sur la mesure.

Par souci d'exactitude, on a aussi représenté en figure 4 des capacités Cp1' et Cp2', en parallèle sur les capacités C1 et C2, correspondant aux autres capacités parasites du système, par exemple aux capacités entre le plot 32 et les plaques externes. En pratique, ces capacités parasites Cp1' et Cp2' seront très faibles, contrairement au cas de l'art antérieur où elles incluent les capacités Cp1 et Cp2 du cadre de scellement et où elles ont un effet néfaste sur la mesure de C1 et C2.

Un autre avantage de l'élimination de l'influence des capacités Cp1 et Cp2 liées à la zone de cadre est que ces capacités sont variables, notamment en fonction de l'aspect de périphérie externe du composant. Par exemple, si la périphérie externe des couches 5 et 6 est chargée d'humidité, ceci tendra à modifier (augmenter) les valeurs des capacités parasites associées. Il est donc tout particulièrement important que leur influence, qui est variable, soit éliminée.

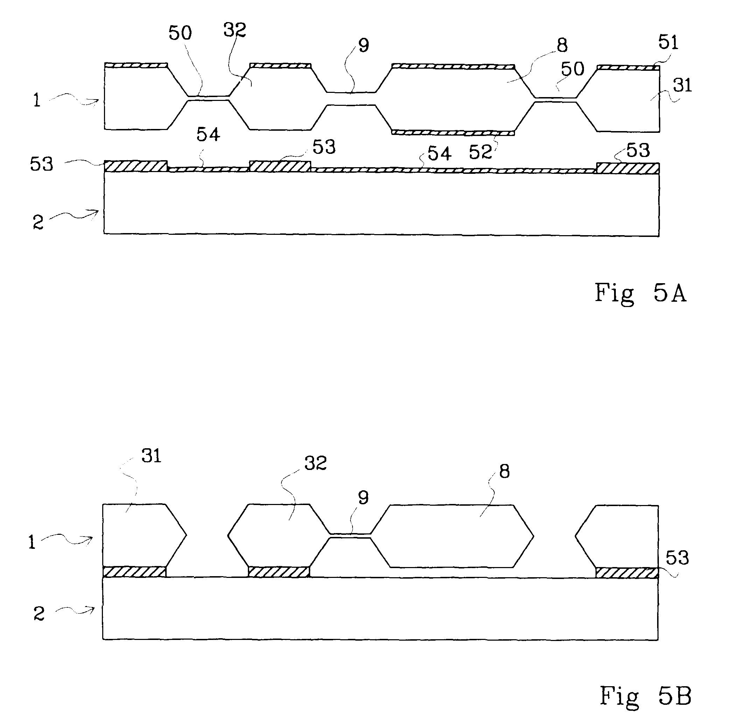

Les figures 5A et 5B représentent à titre d'exemple, deux étapes possibles de fabrication d'un dispositif selon la présente invention.

En figure 5A, on a représenté en vis-à-vis la plaquette centrale 1 et une plaquette externe, en l'occurence la plaquette inférieure 2. La plaquette centrale 1 a été préalablement gravée pour former la région de cadre 31, la région de plot (ou de cadre interne) 32, et la région de masselotte 8. A ce stade, il demeure entre le cadre et la partie centrale des lamelles de liaison 50 d'épaisseur inférieure aux zones réservées pour former les barres de suspension 9 qui, à ce stade, ont une épaisseur plus grande que leur épaisseur finale souhaitée. Les surfaces supérieures des régions de cadre, de plot et de masselotte sont revêtues d'une couche d'oxyde de silicium, par exemple de l'oxyde thermique 51, qui a servi de masque pour les gravures précédentes. De préférence, la face inférieure de la plaquette 1 est exempte de revêtement d'oxyde sauf une couche mince sur la surface inférieure de la masselotte 8.

La face de la plaquette externe 2 en regard de la plaquette centrale 1 est préparée pour comprendre des couches d'oxyde épais 53 en regard de la région de cadre 31, de la région de plot 32 et des couches d'oxyde mince 54 ailleurs, ces couches d'oxyde mince pouvant être obtenues par gravure et masquage de régions de la couche d'oxyde épais. On notera que l'épaisseur cumulée de la couche d'oxyde mince 54 et de la couche d'oxyde mince 52 sur la face inférieure de la masselotte 8 est inférieure à l'épaisseur de la couche 53.

Ensuite, comme le représente la figure 5B, on plaque la plaquette centrale 1 sur la plaquette inférieure 2 de façon que le cadre 31 et le plot 32 viennent en appui sur les couches d'oxyde 53 de la plaquette inférieure. Puis on procède à un traitement thermique à une température de l'ordre de 900 à 1000°C pour obtenir une soudure silicium-oxyde de silicium. Après cela, on procède à une gravure sélective du silicium pour éliminer les lamelles de liaison 50 et amener les barres de fixation 9 à l'épaisseur souhaitée. Ensuite, on procède à une gravure du silicium pour éliminer les couches d'oxyde mince 51, 52 et 54. Il se produira éventuellement pendant cette étape une légère gravure latérale des couches d'oxyde épais 53 mais ceci n'a pas d'influence sur le fonctionnement du dispositif. Dans la figure 5B, on n'a pas représenté l'ouverture isolée permettant d'accéder au plot 32.

Après l'étape de la figure 5B, on ramène la plaquette supérieure 3 au-dessus de la plaquette 1, cette plaquette 3 étant munie d'un cadre d'oxyde correspondant au cadre 53, en regard de la région de plot 32 et de la région de cadre 31.

Le procédé de fabrication décrit en relation avec les figures 5A et 5B constitue seulement un exemple d'un mode de réalisation possible de la présente invention. Une caractéristique notable est qu'il est procédé à une soudure préalable de la plaquette centrale et d'une plaquette externe pour pouvoir éliminer des lamelles de liaison, ce qui permet de préparer la plaquette centrale 1 en un tout solidaire avant d'éliminer ces lamelles. D'autres procédés de gravure apparaîtront à l'homme de l'art. En outre, diverses variantes pourront apparaître, par exemple des régions tournées vers l'intérieur des plaques externes dans les zones de non contact pourront être surgravées pour limiter encore les capacités parasites.

L'homme de l'art notera que la présente invention est susceptible de diverses variantes et modifications. Par exemple, après assemblage des trois plaquettes, la surface externe des plaquettes externes pourra être oxydée et revêtue d'une couche métallique formant blindage, pouvant également être reliée à la masse pour protéger le dispositif contre des surtensions parasites. Par ailleurs, des modes de réal réalisation d'un type de micro-capteur spécifique ont été illustrés mais la présente invention s'applique de façon générale à divers microcapteurs de type capacitif, ou à résonance, dans lesquels on souhaite éliminer l'influence des capacités parasites associées au pourtour de la cavité interne du capteur.

Notamment, la présente invention pourra s'appliquer à une structure du type de celle illustrée en figure 2, dans laquelle la lamelle résonante 13, au lieu d'être disposée entre un plot et le cadre externe sera disposée entre deux plots, le deuxième plot étant monté sur une zone épaisse de la plaquette inférieure 2.

On a décrit et représenté schématiquement ci-dessus la fabrication d'un micro-capteur selon la présente invention. Il apparaîtra clairement à l'homme de l'art qu'en pratique cette fabrication résulte d'un procédé collectif, chaque plaquette faisant initialement partie d'une plaque de plus grande dimension, la séparation en capteurs individuels se faisant après les opérations finales d'assemblage et éventuellement de formation de contact.

Dans ce qui précède, il a été indiqué que la partie interne du capteur est une zone à atmosphère réduite. Pour obtenir ce vide, l'homme de l'art pourra utiliser divers procédés. Par exemple, les plaquettes pourront être accolées dans une enceinte vide, ou bien un pompage pourra être réalisé après assemblage des plaquettes. Il est également possible de prévoir un remplissage des plaquettes par un gaz tel que de l'oxygène susceptible d'être, par recuit, absorbé par le silicium.

## Revendications

1. Micro-capteur capacitif comprenant un sandwich de trois plaquettes de silicium (1, 2, 3), chaque face d'une région en forme de cadre (31) de la plaquette centrale étant accolée à la face en regard de chaque plaquette externe par l'intermédiaire d'une couche mince formant une bande isolante (5, 6), l'une au moins des plaquettes externes constituant une première électrode (22, 23), et au moins une partie centrale de cette plaquette centrale formant une capacité variable avec au moins l'une des plaquettes externes, caractérisé en ce que ladite région en forme de cadre de la plaquette centrale est dissociée électriquement de ladite partie centrale, des premiers moyens de contact (26) étant solidaires de la partie en forme de cadre et des deuxièmes moyens de contact (21) étant reliés à ladite partie centrale et constituant une deuxième électrode de ladite capacité variable.

2. Micro-capteur capacitif selon la revendication 1 constituant un accéléromètre, caractérisé en ce que ladite partie centrale de la plaquette centrale forme une masselotte (8) en suspension sur un plot (32) pris en sandwich entre les plaquettes externes par l'intermédiaire de couches isolantes (35, 36).

3. Micro-capteur capacitif selon la revendication 1 constituant un capteur de pression, caractérisé en ce que la plaquette inférieure comprend une partie amincie (11) formant membrane et en ce que ladite partie centrale de la plaquette centrale comprend un premier plot (12) monté sur cette membrane et une lamelle s'étendant entre le premier plot et un deuxième plot monté entre les plaquettes externes par l'intermédiaire de couches isolantes, ladite lamelle formant avec la plaquette supérieure un résonateur capacitif de caractéristiques variables en fonction de la pression appliquée.

4. Micro-capteur capacitif selon la revendication 1, caractérisé en ce que ladite région en forme de cadre est mise au potentiel de référence auquel est placée, éventuellement de façon flottante, ladite région centrale.

5. Micro-capteur capacitif selon la revendication 1, caractérisé en ce que les couches isolantes sont en oxyde de silicium.

6. Procédé de fabrication d'un micro-capteur capacitif, caractérisé en ce qu'il comprend les étapes suivantes :
graver une plaquette centrale de silicium pour former un cadre (31) et une partie centrale comportant un plot (32) et une région sensible (8, 9), en laissant de minces lamelles de liaison (50) entre le cadre et la partie centrale, les faces supérieures du cadre, du plot et de la partie sensible étant revêtues d'une couche d'oxyde (51) ;
former sur une face tournée vers la plaquette centrale d'une plaquette externe de silicium des couches d'oxyde (53) en regard des régions de cadre et de plot ;
accoler et souder la plaquette centrale et la plaquette externe ;
procéder à une étape de gravure pour éliminer les lamelles de liaison, cette gravure étant déterminée pour atteindre des épaisseurs souhaitées dans la région sensible ;
préparer une deuxième plaquette externe de silicium comprenant des couches d'oxyde en regard des régions de cadre et de plot et l'accoler à la plaquette centrale ; et
procéder aux étapes de métallisation appropriées pour établir des contacts sur le cadre, sur le plot et sur une plaquette externe.

## Patentansprüche

1. Kapazitiver Mikrosensor bzw. -meßfühler mit einer Sandwich-Anordnung von drei Siliziumplättchen (1, 2, 3), wobei beide Seiten bzw. Oberflächen eines rahmenförmigen Bereichs (31) des mittleren Plättchens jeweils mit der gegenüberliegenden Oberfläche des jeweiligen äußeren Plättchens über eine einen Isolierstreifen (5, 6) bildende dünne Schicht verbunden ist, wobei wenigstens eines der äußeren Plättchen eine erste Elektrode (22, 23) bildet und wenigstens ein zentraler Teil dieses mittleren Plättchens eine veränderliche Kapazität mit wenigstens einem der äußeren Plättchen bildet,
dadurch gekennzeichnet, daß der genannte rahmenförmige Bereich des mittleren Plättchens elektrisch von dem genannten zentralen Teil getrennt ist, daß erste Kontaktmittel (26) mit dem rahmenförmigen Teil einstückig oder fest verbunden sind und daß zweite Kontaktmittel (21) mit dem genannten zentralen Teil verbunden sind und eine zweite Elektrode der genannten variablen Kapazität bilden.

2. Kapazitiver Mikrosensor bzw. -meßfühler nach Anspruch 1, der einen Beschleunigungsmesser darstellt,
dadurch gekennzeichnet, daß der genannte zentrale Teil des mittleren Plättchens einen Inertial-Masseblock (8) in Aufhängung an einem Block bzw. Stutzen (32) bildet, der vermittels isolierender Schichten (35, 36) sandwichartig zwischen den äußeren Plättchen eingeschlossen ist.

3. Kapazitiver Mikrosensor bzw. -meßfühler nach Anspruch 1, der einen Drucksensor darstellt,
dadurch gekennzeichnet, daß das untere Plättchen einen eine Membran bildenden verdünnt ausgebildeten Teil (11) aufweist und daß der genannte zentrale Teil des mittleren Plättchens einen ersten auf dieser Membran montierten Klotz bzw. Stutzen (12) aufweist sowie eine Lamelle, welche sich zwischen dem ersten Klotz bzw. Stutzen und einem zweiten Klotz bzw. Stutzen erstreckt, der zwischen den äußeren Plättchen vermittels isolierender Schichten angeordnet ist, wobei die genannte Lamelle mit dem oberen Plättchen einen kapazitiven Resonator mit in Abhängigkeit von dem anliegenden Druck variablen Eigenschaften bildet.

4. Kapazitiver Mikrosensor bzw. -meßfühler nach Anspruch 1,
dadurch gekennzeichnet, daß der genannte rahmenförmige Bereich auf dem Bezugspotential liegt, auf welchem gegebenenfalls in frei flottierender Form der genannte zentrale Bereich liegt.

5. Kapazitiver Mikrosensor bzw. -meßfühler nach Anspruch 1,
dadurch gekennzeichnet, daß die isolierenden Schichten aus Siliziumoxid bestehen.

6. Verfahren zur Herstellung eines kapazitiven Mikrosensors bzw. -meßfühlers,
dadurch gekennzeichnet, daß das Verfahren die folgenden Stufen umfaßt:
- ein mittleres Siliziumplättchen wird so geätzt, daß ein Rahmen (31) und ein einen Klotz bzw. Stutzen (32) und einen ansprechempfindlichen Bereich (8, 9) aufweisender zentraler Teil gebildet wird, unter Belassung dünner Verbindungslamellen (50) zwischen dem Rahmen und dem zentralen Teil, wobei die Oberseiten des Rahmens, des Klotzes bzw. Stutzens und des ansprechempfindlichen Teils mit einer Oxidschicht (51) überzogen sind;
- auf einer dem mittleren Plättchen zugewandten Seite eines äußeren Siliziumplättchens werden in Ausrichtung mit den Rahmenbereichen und dem Klotz- bzw. Stutzenbereich Oxidschichten (53) erzeugt;
- das mittlere Plättchen und das äußere Plättchen werden miteinander durch Schweißen bzw. Löten verbunden;
- es wird eine Ätzstufe durchgeführt, zur Beseitigung der Verbindungslamellen, wobei diese Ätzung so bestimmt wird, daß die gewünschten Materialstärken in dem ansprechempfindlichen Bereich erzielt werden;
- ein zweites äußeres Siliziumplättchen wird so behandelt, daß es mit dem Rahmenbereich und mit dem Klotz- bzw. Stutzenbereich ausgerichtete Oxidschichten aufweist, und sodann mit dem mittleren Plättchen verbunden; und
- es werden geeignete Metallisierungsschritte durchgeführt zur Erzeugung von Anschlußkontakten an dem Rahmen, an dem Klotz bzw. Stutzen und an einem äußeren Plättchen.

## Claims

1. A capacitive micro-sensor including a sandwich of three silicon plates (1,2,3), each surface of the frame region (31) of the central plate being assembled to the opposing surface of each external plate through a thin layer forming an insulating stripe (5,6), at least one of the external plates forming a first electrode (22,23), and at least one central portion of said central plate forming a variable capacity with at least one of said external plates, characterized in that the frame region of said central plate is electrically disconnected from said central portion, first contact means (26) being coupled to the frame portion, and second contact means (21) being coupled to said central portion and forming a second electrode of said variable capacity.

2. The capacitive micro-sensor of claim 1 forming an accelerometer, characterized in that said central portion of the central plate forms an inertia block (8) suspended to a stud (32) sandwiched between said external plates through insulating layers (35,36).

3. The capacitive micro-sensor of claim 1 forming a pressure sensor, characterized in that the lower plate includes a thinner portion (11) forming a diaphragm, and the central portion of said central plate includes a first stud (12) mounted onto said diaphragm, and a strip extending between said first stud and a second stud mounted between said external plates through the insulating layers, the strip forming with the upper plate a capacitive resonator whose characteristics vary as a function of the applied pressure.

4. The capacitive micro-sensor of claim 1, characterized in that said frame region is set (possibly in a floating manner) to the reference voltage of said central plate.

5. The capacitive micro-sensor of claim 1, wherein said insulating layers are made of silicon oxide.

6. A method for manufacturing a capacitive micro-sensor, characterized in that comprises the following steps:
etching a silicon central plate in order to form a frame (31) and a central portion including a stud (32) and a sensitive region (8,9), leaving thin connecting strips (50) between the frame and the central portion, the upper sides of said frame, of said stud and of said sensitive portion being plated with an oxide layer (51);
forming on one surface of a silicon external plate facing the central plate, external oxide layers (53) facing said frame and stud regions;
assembling and welding said central plate onto said external plate;
etching for eliminating the connecting strips and so as to provide the desired thicknesses in said sensitive region;
preparing a second silicon external plate including oxide layers in front of said frame and stud regions, and assembling the external plate to the central plate; and
carrying out appropriate metallization steps for contacting said frame, said stud and an external plate.
